# EUROPEAN PATENT SPECIFICATION

(11) **EP 0 570 546 B1**
(45) Date of publication and mention of the grant of the patent: **05.03.1997**
(21) Application number: 92922617.3
(22) Date of filing: 28.10.1992
(51) Int. Cl.: B05C 5/00, B05D 1/00, B01J 2/16

(54) **FLUIDIZED BED PROCESSOR AND METHOD FOR GRANULATING OR COATING A PRODUCT IN SUCH A PROCESSOR**
WIRBELSCHICHT-BEHANDLUNGSEINRICHTUNG UND VERFAHREN, UM DARIN EIN GUT ZU GRANULIEREN ODER ZU BESCHICHTEN
DISPOSITIF DE TRAITEMENT A LIT FLUIDISE ET PROCEDE POUR Y GRANULER OU REVETIR UN PRODUIT

(30) Priority: 28.10.1991 US 783124
(43) Date of publication of application: 24.11.1993
(73) Proprietor: GLATT AIR TECHNIQUES, INC., Ramsey NJ,07446 (US)
(72) Inventor: JONES, David, Michael, Ramsey, NJ 07446 (US)
(74) Representative: Eder, Carl E.
(86) International application number: PCT/US92/08986
(87) International publication number: WO 93/08923

(56) References cited:
- DE-A- 3 323 418
- US-A- 3 110 626

## Description

The invention relates to a fluidized bed processor having a product container section including a spray nozzle.

The invention relates also to a method for granulating or coating a product in a fluidized bed in a processor.

Various different fluidized bed processors comprising at least one spray nozzle and serving for granulating or coating particles of a product heretofore have been provided. The DE-A-3 323 418 discloses for instance a processor with a casing forming a plenum chamber and a product container section disposed above the plenum chamber. A gas-permeable bottom is disposed between the plenum chamber and the product container section. The processor comprises a spray nozzle which projects through the bottom into the product container section and posseses an outlet disposed above the bottom. The nozzle may be configured for pneumatical atomization, i.e. using a high-speed jet of air to atomize a liquid. The processor comprises also a tubular partition disposed inside the product container section a distance above the bottom.

In the operation of this known processor, a starting material or product consisting of particles is initially introduced into the product container section. Moreover an upward flow of gas is produced that fluidizes the particles. The gas passing through the tubular partition carries the particles upwardly through the tubular partition. The particles move afterwards downwardly in an outer area encompassing the tubular partition and reenter the tubular partition at the lower end thereof. The spray nozzle atomizes a spray material, that serves for coating or agglomerating the particles.

The spray material consists normally at least to a substantial part of a liquid. The nozzle forms a liquid jet that breakes into small droplets. This droplets are distributed in a cone-shaped cloud or spray pattern. The known processor may experience turbulent our flow immediately above the spray nozzle. Particles to be coated or agglomerated may enter the spray pattern produced by the spray nozzle very close to the spray nozzle and before the spray pattern has fully developed.

This results in uncontrolled droplet formation upon those particles that enter the spray pattern too soon. This gives in turn the drawback that the effectiveness of the processor is reduced and results in a relatively extensive processing time. The fact that particles may enter the spray pattern to soon may result also in exessive agglomeration of the particles. This is particularly disadvantageous if the particles are only to be coated, but may also be unfavourable if the particles shall be agglomerated. If the particles to be coated have abrasive properties, they may moreover move with sufficient force to cause erosion of the nozzle tip.

The US-A-3 196 827 and US-A-4 858 522 disclose similar processors for coating and/or granulating particles. The US-A-3 110 626 discloses a processor for coating solid particles suspended in an air stream within the interior region of a conical or cylindrical sleeve mounted in the base region of a funnel-shaped section of a casing. The processors disclosed by these three documents have similar drawbacks as the previously described processor known from the DE-A-3 323 418.

Starting from the prior art known from the DE-A-3 323 418, it is an object of the invention to provide a fluidized bed processor comprising a spray nozzle and a method for granulating or coating a product which avoid that the granulating or coating is negatively influenced thereby that the particles enter the spray pattern too soon. Moreover, it shall be avoided that abrasive particles cause erosion of the nozzle tip.

This object is achieved according to the invention by a processor as set out in claim 1 and by a method as set out in claim 10.

Hence, the processor according to the invention comprises a means which is positioned adjacent said spray nozzle and/or adapted to form in operation a gas stream that surrounds the spray nozzle so that said means and/or said gas stream shields in operation the initial spray pattern developed by said nozzle against the entrance of particles moving through the fluidized bed.

This means and/or gas stream forms a shield or barrier. This ensures that particles, disposed in the product container section outwardly of the shield or barrier, are prevented from entering the spray pattern before the spray pattern is sufficiently developed. This allows the droplet density to decrease before the droplets contact the particles of the fluidized bed. Accordingly, the particle surface will be more evenly wetted preventing excessive particle agglomeration. The liquid contact with the particles can be more precisely controlled.

The processor and the method according to the invention give particularly the advantage that particles to be coated are prevented from entering the spray pattern until such time as the droplet density of the spray pattern has been substantially reduced. This enables to use higher spray rates with less agglomeration.

The fluidized bed processor is preferably configured as so-called Wurster type fluidized bed processor. A Wurster type fluidized bed processor for coating particles is described for instance in Encyclopedia of Pharmacentical Technology, Vol. 1, pages 192 - 195, 1988 and comprises a substantially cylindrical partition. In operation of such a processor, the portion of the fluidized bed being encompassed by the partition forms an upbed in which the particles are moved generally upwardly.

In a processor according to the invention and configured as Wurster processor, said means can be configured for shielding the nozzle within the upbed and allowing up flow of air within said means around the nozzle.

In operation of a processor according to the invention and configured as Wurster processor, there can be provided a columnar shield of upwardly moving air about the lower portion of the spray pattern formed by a spray nozzle, wherein the shield may be adjusted vertically according to the spray pattern being discharged and the air flow velocity of the processing air.

If a shield such as that set forth in the immediately preceding paragraph is provided, the vertical positioning of the shield may be utilized to alter the associated spray pattern.

There may be provided a coating zone within the upbed of a Wurster type coating processor whereby the coating zone can be protected by a surrounding column of upwardly moving air in order to allow the coating zone to more fully develop and the liquid droplet density thereof to be substantially reduced prior to entry of particles into the coating zone.

An embodyment of the subject-matter of the invention and advantages resulting from the invention are more fully hereinafter described, reference being made to the accompanying drawings.

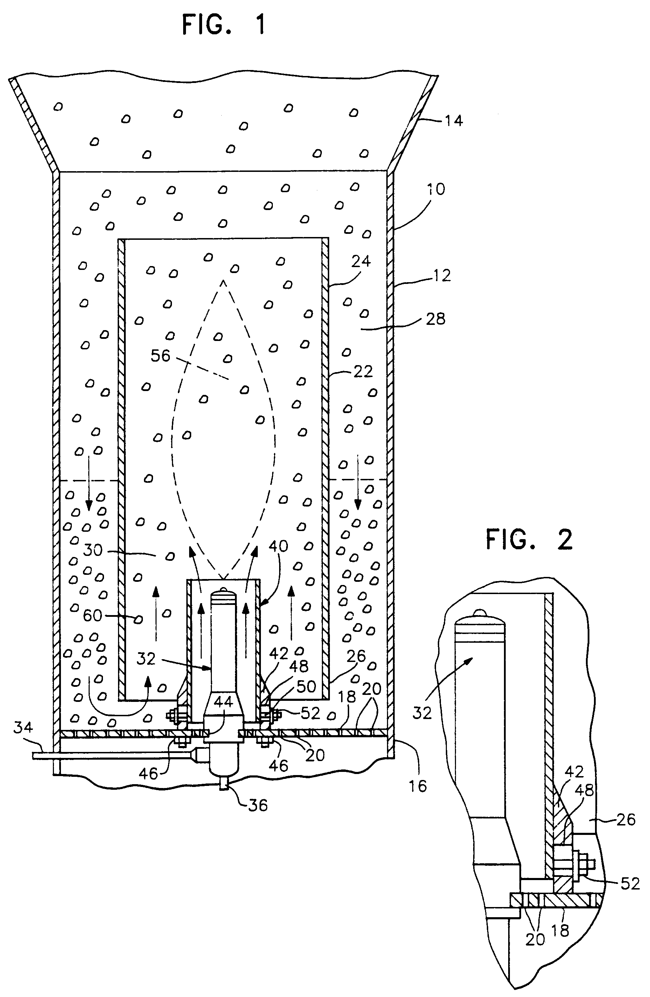

Figure 1 is a fragmentary schematic vertical sectional view of a Wurster type bottom spray coater illustrating the mounting of an inner tubular partition about the spray nozzle and projecting at least slightly above the upper extremity of the spray nozzle; and
Figure 2 is an enlarged fragmentary schematic vertical sectional view illustrating the manner in which the interior partition may be adjusted vertically relative to the air distribution plate.

Referring now more specifically to the drawings the numeral 10 generally designates a typical Wurster type coater, modified in accordance with the present invention. The coater includes a product container section 12, an expansion chamber 14 into which the upper end of the product container section 12 opens, and a lower plenum chamber 16 disposed beneath the product container, separated therefrom through the utilization of an air distribution plate or screen 18. The upper end of the expansion chamber 14 may open into a filter housing (not shown) disposed thereabove including the necessary air filter structure and air outlet.

The air distribution plate or screen 18 defines a plurality of air passage openings 20 through which air or gas from the lower plenum chamber 16 may pass into the product container section 12. As is conventional in Wurster-type fluidized bed systems, the holes in the plate 18 in the area outside the cylindrical partition 22 are smaller in diameter than the holes beneath the partition 22. This results in higher air volumes and velocities in the central area than in the downbed area. Although only a single plate 18 is depicted, it should be understood that the plate 18 is typically formed of two plates, an outer annular plate and an inner replaceable plate whereby the air flow ratios between the upbed and the downbed may be changed by substituting the inner plate with a plate having different air opening configurations. Further, the inner plate may itself be formed of two stacked plates having identical air opening configurations but which are rotatable with respect to each other to change the effective open area.

The product container 12 has a cylindrical partition 22 supported therein in any convenient manner having open upper and lower ends, 24 and 26, the lower end 26 being spaced above the air distribution plate or screen 18. The partition 22 divides the interior of the product container section 12 into an outer annular downbed area 28 and interior upbed 30. A spray nozzle assembly, referred to generally by the reference number 32, is mounted at or through the air distribution plate 18 and preferably projects upwardly into the interior of the cylindrical partition 22 and the upbed 30 defined therein. The spray nozzle 32 receives a supply of air under pressure through an air supply line 34 and coating liquid under pressure through a liquid supply line 36, as is known in the art.

A shielding means, such as an inner cylindrical partition 40 is disposed about the upwardly projecting spray nozzle assembly 32. The inner cylindrical partition 40 has its lower open end snugly and telescopingly received within a tubular collar 42 secured to the air distribution plate or screen 18 about the opening 44 through which the spray nozzle assembly 32 is secured. The tubular collar 42 is secured to the air distribution plate or screen 18 through the utilization of suitable fasteners 46. The collar 42 includes circumferentially spaced axial slots 48 in which mounting studs 50 projecting radially outwardly of the inner cylindrical partition 40 are slidingly received. The mounting studs 50 have threaded nuts 52 threadedly engaged therewith whereby vertically adjustment of the inner cylindrical partition 42 relative to the tubular collar 42 may be enabled.

The spray nozzle assembly 32 discharges a spray pattern 56 of air and coating liquid. Some of the air introduced into the lower plenum chamber 16 passes upwardly through the openings 20 formed through the air distribution plate or screen 18 below the inner cylindrical partition 40. The partition 40, as well as the tubular column of upwardly rising air about the spray nozzle assembly 32, shields the lower, beginning portion, of the spray pattern 56. The particles 60, passing upwardly through the upbed 30, are not drawn into this spray pattern. The annular column of air thereby allows spray pattern 56 to substantially develop, and the liquid droplet density of the spray pattern is substantially reduced before particles 60 enter into the spray pattern 56. By adjusting the height of the inner cylindrical partition 40 relative to the tubular collar 42, the height of the upper end of the inner cylindrical partition 40 relative to the upper extremity of the spray nozzle assembly 32 may be adjusted.

Although only a single outer partition 22, inner partition 40, and spray nozzle 32 are depicted, multiple outer partitions may be employed, each having one or more spray nozzles and inner partitions associated therewith.

Various modifications to the above-described preferred embodiment may be utilized. For example, a spray nozzle may be utilized in systems other than Wurster coater type systems where shielding is desirable. Such systems may not require the spray nozzle to be upwardly disposed; the spray nozzle nay be angled with respect to the major axis of the container. The shielded spray nozzle nay also be utilized without a Wurster-type cylindrical partition 22. The shielded spray nozzle may also be within an expansion chamber instead of the product container. Further, although an air distribution plate or screen is depicted, gas flow nay originate into the processor through other structural arrangements. In addition, although the shielding of the spray nozzle is preferably provided by an inner cylindrical partition 40, other shielding arrangements may be utilized. For example, shielding of the spray nozzle may be accomplished by formation of an air wall or stream that surrounds the nozzle and prevents particles from prematurely entering into the spray pattern. Alternatively, a deflector or shield may be formed integral with the spray nozzle itself to prevent particles from interfering with the developing spray pattern.

Utilizing the concepts of the invention hereinabove described, the following represents test procedures followed and results obtained made in accordance with the invention:

### Materials

Sugar/cornstarch beads (Nu-pariels, Crompton & Knowles, Ingredient Technology Division, Pennsauken, NJ) in the size range of 7,88 - 9,85 mesh/cm (20-25 mesh) were used as a model coating substrate for most of the trials. These beads are deemed to be a good model since many active materials are converted into pellet form for coating, or are layered onto these type of beads. Theophylline [<127,95 mesh/cm (<325 mesh), Knoll Whippany, NJ] and potassium chloride [7,88 - 23,62 mesh/cm (20-60 mesh), Mallinkrodt, St. Louis, MO] served as models for powder substrates.

A typical aqueous HPMC based coating solution (Opadry, Colorcon West Point, PA 10% coating by weight in tap water) was used throughout the trials. A green colored formula (YSl-3303N) was used for most of the experiments but was shifted to a Maroon color (Y-1-3910) to check the effects of viscosity and composition differences on the coating performance.

### Equipment

All of the coating trials were carried out in a GPCG60/100 fluid bed granulator/coater (Glatt Air Techniques, Ramsey, NJ) using either the 812,8 mm (32") or 457,2 mm (18") Wurster process inserts (product container sections 12). The 457,2 mm (18") Wurster insert (product container section) trials utilized the standard 228,6 mm (9") diameter outer partition 22, which is 558,8 mm (22") long., The 812,8 mm (32") Wurster insert (product container section) trials were performed with a single outer partition 304,8 mm (12") in diameter, 52,9 mm (27,5") long.

The outer partition height was adjusted so that a thick stream of substrate flowed through the coating zone. Due to the different airflow patterns in the two sizes of Wurster inserts used the partition needed to be set at a different height for each insert. A distance of 19,05 mm (0,75 inches) from the bottom plate was sufficient for the 457,2 mm (18") Wurster insert (product container section 12). For the 812,8 mm (32") Wurster insert (product container section 12) the partition was raised to 31,75 mm (1,25) inches above the bottom plate to maintain a high density particle stream.

A bottom screen, stainless steel dutch weave type, 39,4 mesh/cm (100 mesh) rating was in place over the air distribution plate during all the trials. Exhaust filters, "PACF" type, rated 3-10 microns were used to retain any process fines. The filter shake cycle was set to shake for 3 s every 30 seconds in the continuous fluidization mode (GPCG) mode. This meant that each filter shook 3 s after every 63 s of process time.

Two types of nozzles were used each with a different characteristic spray pattern development. Model 940/7-1-S25 (manufactured by Gustav Schlick Co. Coburg, Germany referred to as S-25) is supplied standard for these sizes of Wurster inserts (product container sections). Model 0/4-7-1-S48 (referred to as S-48) has a higher air consumption rate and fully atomizes the liquid stream distributing the droplets in a cone shaped pattern (develops spray pattern) in a shorter distance. Liquid was delivered to the nozzles with a peristaltic pump. The atomization air pressure was adjusted so that the droplet size distribution would remain the same no matter which nozzle was in use. Nozzle ports with a 1,2 mm opening were used with the air cap adjusted flush with the nozzle port end.

In those trials where the fluid flow in the coating zone was altered the fluidized particles were delayed from contacting the atomized stream by a 76,2 mm (3") diameter inner cylinder partition 40 mounted on the bottom plate and extending up 12,7 mm (0,5") above the nozzle port height. The cylinder partition was open to the fluidizing air at the bottom.

### Test Procedure

The air volume flow rate settings were determined by a pre-trial fluidization test. Air volume flow rate was then held constant for each unit throughout the trials without further optimization. For the 457,2 mm (18") Wurster insert (product container section) the air volume flow rate was 21,24 ± 2,83 m³/min (750 cfm ± 100 cfm) and 48,14 ± 2,83 m³/min (1700 cfm ± 100 cfm) was used on the 812,8 mm (32") Wurster insert (product container section). For experiments on both inserts the product temperature was held between 38°C and 42°C with an inlet air dewpoint of 8°C (± 1°C).

Each run would be allowed to come to the desired test conditions, then the spray was started at a slow rate. If after 15 minutes of spray a sample taken had less than 1% retained on the sieve specified for the test then the performance was deemed acceptable and the spray rate would be raised. The amount of the spray increase was determined by estimating the point at which 1% of the sample would be retained on the test sieve.

With the sugar beads a 7,88 mesh/cm (20 mesh) sieve was the test sieve as mentioned above. After each trial the batch was put through a 7,88 mesh/cm (20 mesh) sieve in order to remove any agglomerates. The beads passing through 7,88 mesh/cm (20 mesh) were used in the subsequent trial. For the 812,8 mm (32") insert trials with sugar beads an 7,08 mesh/cm (18 mesh) sieve was used in the test in order to account for the bead growth due to repeated coating. On the 457,2 mm (18") Wurster insert a starting charge of 45 kg was used compared to 200 kg on the 812,8 mm (32") Wurster insert.

The experiment with theophylline as a substrate used 26 kg of raw material in the 457,2 mm (18") Wurster insert. The test sieve for Theophylline was 39,4 mesh/cm (100 mesh). With potassium chloride 50 kg were charged to the product container. At the end of the potassium chloride run the process parameters were varied in order to find the maximum possible spray rate without having more than 1% on 7,08 mesh/cm (18 mesh). Air volume flow rate was increased from the protocol value of 21,28 m³/min (750 cfm) to the highest value possible, 33,98 m³/min (1200 cfm). Atomization air pressure was also increased from 250 kPa (2,5 bar) to 400 kPa (4,0 bar).

### Experimental Program

A matrix of experiments was set up to test the coating performance with nozzle type, barrier installation, and machine size as variables. On the 457,2 mm (18") Wurster insert four experiments were run with the sugar beads and the green coating: nozzle S-25 with and without the barrier, i.e. inner partition 40, in place, and nozzle S-48 with and without the barrier, i.e. inner partition 40, in place. The set of experiments using the S-25 nozzle was then repeated in order to confirm the results. Powdered substrate, theophylline and potassium chloride were used with the S-48 nozzle and the barrier, i.e. inner partition, in place in the last two experiments on the 457,2 mm (18") Wurster insert.

In the 812,8 mm (32") Wurster insert two experiments using the S-48 nozzle and spraying onto sugar beads were performed --one with the barrier, i.e. inner partition 40, in place and one without. In these trials the coating solution was switched to maroon to see if the improvements in coating efficiency were still evident with a more viscous solution.

### Results and Discussion

The spray rate at 1% agglomeration was estimated from the data reported during the run on the batch sheets. Data for the matrix of 457,2 mm (18") Wurster insert experiments is shown in Table 1. The data for the S-48 nozzle experiments has been averaged between the two runs.

**Table 1**

| 457,2 mm (18") Wurster Spray Rate at 1% Agglomeration (ml/min) | | |
|---|---|---|
| nozzle | barrier (inner partition) | no barrier (inner partition) |
| S-25 | 290 | 90 |
| S-48 | 410 | 270 |

Examination of the table reveals a dramatic improvement in spray rate at an equal level of agglomeration for use of a barrier, i.e. inner partition, as compared with the standard case without use of a barrier, i.e. inner partition. It is also of interest that the improved efficiency by changing to a nozzle that develops the spray pattern more quickly is nearly the same as placing a barrier, i.e. inner partition, around the standard nozzle. This observation is in agreement with the hypothesis that the agglomeration and limitation of spray rate is caused by the premature contact of substrate with the developing spray pattern.

With a similar extraction of the data the 812,8 mm (32") Wurster showed 1% agglomeration at 550 g/min spray without the barrier, i.e. inner partition, and 780 g/min with the barrier, i.e. inner partition, in place. Only the S48 nozzle was tested this time with the maroon coating. The efficiency increase is in similar proportions to the experiment on the 457,2 mm (18") Wurster even though the scale of the machine and the coating characteristics were changed.

Both the theophylline and potassium chloride coated with the S-48 nozzle and the barrier, i.e. inner partition, in place had similar behavior during the run to a conventional machine setup. The spray rate for the potassium chloride substrate was 1050 g/min at the point of first agglomeration. Agglomeration began to occur slowly at 1250 g/m. However, at this high spray rate, the machine's drying capacity was exceeded and the desired product temperature could not be maintained. As a result, excessive surface moisture probably allowed the formulation of liquid bridges between particles ultimately leading to agglomeration. Although the acceptable spray rate for theophylline was less dramatic, the 230 g/min sprayed was higher than expected and yet did not exceed an acceptable level as in the sugar bead experiments.

The surprising result of these experiments was the ability to coat the small particle size material without granulating the substrate. Comparative scanning electron micrographs made with a scanning electron microscope (SEM's) at the same magnification show the small fraction of the particle size distribution being incorporated into the coating on the large fraction of the distribution but then the material ceases to agglomerate and at 10% coating the particle size is very similar to the 4% sample. The average size of the end coated particles being significantly less than 100 microns, the current accepted lower limit for discrete fine particle coating. It was postulated from this observation that the minimum particle size for discrete coating might be effected by the substrate/spray pattern contact and could be significantly reduced by limiting that contact while the spray pattern is still developing.

### CONCLUSIONS

Throughout the experiments described here it is clear that limiting the contact of substrate with a developing spray pattern so that the particle surface is only exposed to spray in low droplet density areas of the spray pattern reduces the over wetting of substrate surface thereby reducing the rate of product agglomeration. Introduction of a barrier, i.e. inner partition 40, to prevent solids from entering the spray pattern and changing the nozzle design so that the pattern develops in a smaller space were shown to have a roughly equivalent effect. Substantial efficiency improvements were still evident when the barrier was used with the modified nozzle. This technique of improved solid liquid contacting was observed on two different sizes of equipment with two different coating formulations on three different substrates.

In addition to the expected result of improved coating efficiency it was also observed for the theophylline, the sample with smallest particle size, that the particle size of the coated material could be kept below normally accepted minimum sizes.

## Claims

1. Fluidized bed processor having a product container section (12) opening downwardly into a plenum chamber (16) through a gas distribution plate or screen (18) having openings (20) formed therethrough for upward flow of fluidizing gas, particularly air, from the plenum chamber (16) into the product container section (12) for fluidizing particles (60) therein so as to form a fluidized bed, the product container section (12) including a spray nozzle (32), characterised thereby, that a means is provided which is positioned adjacent said spray nozzle (32) and/or adapted to form in operation a gas stream that surrounds the spray nozzle (32) so that said means and/or said gas stream shields in operation the initial spray pattern developed by said nozzle (32) against the entrance of particles (60) moving through the fluidized bed.

2. Processor according to claim 1, characterised thereby, that said means comprises a cylindrical partition (40) surrounding the spray nozzle (32), one end of the cylindrical partition (40) disposed at a level adjacent the outermost extremity of the spray nozzle (32).

3. Processor according to claim 1, characterised thereby, that a substantially cylindrical outer partition (22) is disposed inside the product container section (12) and spaced above the distribution plate or screen (18) for defining an inner upbed area (30) and an outer downbed area (28), that the spray nozzle (32) is adapted to discharge upwardly, that the said means comprises an upstanding inner partition (40) mounted adjacent to the gas distribution plate or screen (18), that the upper end of the inner partition (40) is open and disposed at least as high as the upper extremity of the spray nozzle (32) and that the lower end of the inner partition (40) is open for receiving gas from the plenum chamber (16) having passed through the plate or screen (18).

4. Processor according to claim 3, characterised thereby, that the spray nozzle (32) is disposed substantially on a central axis of the outer partition (22) and that the inner partition (40) is substantially cylindrical.

5. Processor according to claim 3 or 4, characterised thereby, that the cylindrical inner partition (40) is connected with the plate or screen (18) by a support means (42, 46, 48, 50) for mounting and axially adjusting the inner partition (40) with respect to the plate or screen (18).

6. Processor according to claim 5, characterised thereby, that the support means (42, 46, 48, 50, 52) includes means for maintaining the lower end of said inner partition generally sealed relative to the plate or screen (18) throughout axial adjustment of inner partition (40) relative to the plate or screen (18).

7. Processor according to claim 5 or 6, characterised thereby, that the support means (42, 46, 48, 50, 52) includes a cylindrical collar (42) projecting upwardly from the plate or screen (18), the lower end of the inner partition (40) being adjustably telescoped into the collar (42).

8. Processor according to one of the claims 1 to 7, characterised thereby, that the product container section (12) is opening upwardly into an expansion chamber (14).

9. Processor according to one of the claims 1 to 8, characterised thereby, that it has a fluidizing gas source to which the plenum chamber (16) belongs.

10. Method for granulating or coating a product in a fluidized bed in a processor (10) having a product container section (12) opening upwardly into an expansion chamber (14) and downwardly into a plenum chamber (16) through a generally horizontally disposed gas distribution plate or screen (18) having openings (20) formed therethrough for upward flow of gas, particularly air, from the plenum chamber (16) into the product container section (12), the latter including a substantially cylindrical partition (22) spaced above the plate or screen (18) for dividing the product container section (12) into an inner upbed area (30) and an outer downbed area (28), and an upwardly discharging spray nozzle (32) mounted substantially coaxially within said cylindrical partition (22), wherein gas, particularly air, is passed upwardly through the plate or screen (18) and through the product container section (12) so that the product forms the fluidized bed, characterised thereby, that a radially confined and shielded column of gas is made to flow upwardly about the spray nozzle (32) from said plate or screen (18) and to be freely discharged into said upbed area (30) at an elevation at least equal in height to the upper extremity of the spray nozzle (32) and/or that a cylindrical inner partition (40) is positioned adjacent the plate or screen (18) so that the inner partition (40) surrounds the spray nozzle (32) and extends from the plate or screen (18) upwardly to a level at least equal in height to the upper extremity of the spray nozzle (32) and that gas passing upwardly through the plate or screen (18) is lead through a space encompassed by the cylindrical inner partition (40) about the spray nozzle (32) to shield the initial spray pattern developed by said nozzle (32) against the entrance of particles moving upwardly through said upbed area (30).

11. Method according to claim 10, wherein the method is adapted to reduce the processing time for granulating or coating the product.

## Patentansprüche

1. Wirbelschicht-Behandlungseinrichtung mit einem Gutbehälterabschnitt (12), der nach unten über eine Gasverteilerplatte oder ein Sieb (18) in eine Plenumkammer (16) mündet, wobei die Gasverteilerplatte bzw. das Sieb (18) Öffnungen (20) besitzt, um ein Verwirbelungsgas, insbesondere Luft, von der Plenumkammer (16) nach oben in den Gutbehälterabschnitt (12) strömen zu lassen, um in diesem Teilchen (60) zu verwirbeln und ein Wirbelbett zu bilden, wobei der Gutbehälterabschnitt (12) eine Sprühdüse (32) enthält, dadurch gekennzeichnet, dass Mittel vorhanden sind, die nahe der Sprühdüse (32) angeordnet und/oder ausgebildet sind, um beim Betrieb einen die Sprühdüse (32) umgebenden Gasstrom zu bilden, so dass die genannten Mittel und/oder der Gasstrom beim Betrieb das von der genannten Düse (32) gebildete Anfangssprühmuster gegen das Eindringen von sich im Wirbelbett bewegenden Teilchen (60) abschirmt.

2. Behandlungseinrichtung nach Anspruch 1, dadurch gekennzeichnet, dass die genannten Mittel eine zylindrische, die Sprühdüse (32) umgebende Trennwand (40) aufweisen, deren eines Ende sich bei einem Niveau in der Nähe des äussersten Endes der Sprühdüse (32) befindet.

3. Behandlungseinrichtung nach Anspruch 1, dadurch gekennzeichnet, dass eine im wesentlichen zylindrische, äussere Trennwand (22) im Gutbehälterabschnitt (12) in Abstand von der Verteilerplatte bzw. dem Sieb (18) oberhalb dieser bzw. diesem angeordnet ist, um eine innere Aufstiegsbettzone (30) und eine äussere Abstiegsbettzone (28) zu definieren, dass die Sprühdüse (32) zum Aussprühen nach oben ausgebildet ist, dass die genannten Mittel eine aufrechte, innere, nahe der Gasverteilerplatte bzw. dem Sieb (18) eingebaute Trennwand (40) aufweisen, dass das obere Ende der inneren Trennwand (40) offen und mindestens so hoch oben angeordnet ist wie das obere Ende der Sprühdüse (32) und dass das untere Ende der inneren Trennwand (40) offen ist, um aus der Plenumkammer (16) durch die Platte bzw. das Sieb (18) geströmtes Gas aufzunehmen.

4. Behandlungseinrichtung nach Anspruch 3, dadurch gekennzeichnet, dass die Sprühdüse (32) im wesentlichen auf einer Mittelachse der äusseren Trennwand (22) angeordnet ist und dass die innere Trennwand (40) im wesentlichen zylindrisch ist.

5. Behandlungseinrichtung nach Anspruch 3 oder 4, dadurch gekennzeichnet, dass die zylindrische, innere Trennwand (40) mit der Platte bzw. dem Sieb (18) durch Tragmittel (42, 46, 48, 50) zum Befestigen und zum axialen Verstellen der inneren Trennwand (40) bezüglich der Platte oder des Siebs (18) verbunden ist.

6. Behandlungseinrichtung nach Anspruch 5, dadurch gekennzeichnet, dass die Tragmittel (42, 46, 48, 50, 52) Mittel aufweisen, um das untere Ende der inneren Trennwand im ganzen axialen Verstellbereich der inneren Trennwand (40) in im allgemeinen geschlossener Verbindung mit der Platte bzw. dem Sieb (18) zu halten.

7. Behandlungseinrichtung nach Anspruch 5 oder 6, dadurch gekennzeichnet, dass die Tragmittel (42, 46,48, 50, 52) einen zylindrischen, von der Platte bzw. dem Sieb (18) nach oben ragenden Kragen (42) aufweisen, wobei das untere Ende der inneren Trennwand (40) teleskopartig im Kragen (42) verstellbar ist.

8. Behandlungseinrichtung nach einem der Ansprüche 1 bis 7, dadurch gekennzeichnet, dass der Gutbehälterabschnitt (12) nach oben in eine Expansionskammer (14) mündet.

9. Behandlungsvorrichtung nach einem der Ansprüche 1 bis 8, dadurch gekennzeichnet, dass sie eine Verwirbelungsgasquelle aufweist, zu der die Plenumkammer (16) gehört.

10. Verfahren zum Granulieren oder Überziehen eines Gutes in einem Wirbelbett in einer Behandlungseinrichtung (10) mit einem Gutbehälterabschnitt (12), der nach oben in eine Expansionskammer (14) und nach unten über eine Gasverteilerplatte oder ein Sieb (18) in eine Plenumkammer (16) mündet, wobei die Gasverteilerplatte bzw. das Sieb (18) im allgemeinen horizontal angeordnet ist und Öffnungen (20) hat, um Gas, insbesondere Luft, von der Plenumkammer (16) in den Gutbehälterabschnitt (12) strömen zu lassen, wobei der letztere eine im wesentlichen zylindrische, im Abstand von der Platte bzw. dem Sieb (18) oberhalb dieser bzw. diesem angeordnete Trennwand (22) zum Teilen des Gutbehälterabschnitts (12) in eine innere Aufstiegsbettzone (30) und eine äussere Abstiegsbettzone (28) enthält, und mit einer nach oben sprühenden Sprühdüse (32), die im wesentlichen koaxial innerhalb der genannten, zylindrischen Trennwand (22) eingebaut ist, wobei Gas, insbesondere Luft, aufwärts durch die Platte bzw. das Sieb (18) und den Gutbehälterabschnitt (12) geleitet wird, so dass das Gut das Wirbelbett bildet, dadurch gekennzeichnet, dass man eine radial eingeschlossene und abgeschirmte Säule von Gas von der Platte bzw. dem Sieb (18) aufwärts um die Sprühdüse (32) herum und auf einem Niveau frei in die genannte Aufstiegsbettzone (30) strömen lässt, dessen Höhe mindestens gleich derjenigen des oberen Endes der Sprühdüse (32) ist, und/oder dass eine zylindrische, innere Trennwand (40) nahe der Platte bzw. dem Sieb (18) angeordnet wird, so dass die innere Trennwand (40) die Sprühdüse (32) umgibt und von der Platte bzw. dem Sieb (18) nach oben in eine Höhe reicht, die mindestens gleich der Höhe des oberen Endes der Sprühdüse (32) ist, und dass aufwärts durch die Platte bzw. das Sieb (18) strömendes Gas durch einen von der inneren Trennwand (40) umschlossenen Raum um die Sprühdüse (32) herumgeleitet wird, um das von der Sprühdüse (32) erzeugte Anfangssprühmuster gegen das Eindringen von sich in der Aufstiegsbettzone (30) aufwärts bewegenden Teilchen abzuschirmen.

11. Verfahren nach Anspruch 10, wobei das Verfahren ausgebildet ist, um die Behandlungszeit zum Granulieren oder Überziehen des Gutes zu reduzieren.

## Revendications

1. Dispositif de traitement à lit fluidisé, qui présente une partie (12) qui sert d'enceinte à produit s'ouvrant vers le bas dans une chambre de collecte (16) par l'intermédiaire d'un plateau de distribution de gaz ou écran (18) dans lequel sont formées des ouvertures (20) en vue d'un écoulement vers le haut du gaz de fluidisation, en particulier de l'air, depuis la chambre de collecte (16) jusque dans la partie (12) qui sert d'enceinte à produit, pour fluidiser les particules (60) qui s'y trouvent de manière à former un lit fluidisé, la partie (12) qui sert d'enceinte à produit comprenant un gicleur de pulvérisation (32), caractérisé en ce qu'il est prévu un moyen qui est disposé en position adjacente audit gicleur de pulvérisation (32) et/ou qui est adapté pour former en fonctionnement un écoulement de gaz qui entoure le gicleur de pulvérisation (32), de telle sorte que ledit moyen et/ou ledit écoulement de gaz protègent en fonctionnement le motif initial de pulvérisation développé par ledit gicleur (32) contre la pénétration de particules (60) qui se déplacent dans le lit fluidisé.

2. Dispositif de traitement selon la revendication 1, caractérisé en ce que ledit moyen comprend une paroi de séparation cylindrique (40) entourant le gicleur de pulvérisation (32), une extrémité de la paroi de séparation cylindrique (40) étant disposée à un niveau contigu à l'extrémité externe du gicleur de pulvérisation (32).

3. Dispositif de traitement selon la revendication 1, caractérisé en ce qu'une paroi externe de séparation (22) essentiellement cylindrique est disposée dans la partie (12) qui sert d'enceinte à produit et espacée au-dessus du plateau de distribution ou écran (18) en vue de définir une région interne (30) de lit montant et une région externe (28) de lit descendant, en ce que le gicleur de pulvérisation (32) est adapté pour déborder vers le haut, en ce que ledit moyen comprend une paroi interne de séparation verticale (40), montée en position contiguë au plateau de distribution de gaz ou écran (18), en ce que l'extrémité supérieure de la paroi interne de séparation (40) est ouverte et disposée au moins aussi haut que l'extrémité supérieure du gicleur de pulvérisation (32), et en ce que l'extrémité inférieure de la paroi interne de séparation (40) est ouverte pour recevoir de la chambre de collecte (16) du gaz qui a traversé le plateau ou écran (18).

4. Dispositif de traitement selon la revendication 3, caractérisé en ce que le gicleur de pulvérisation (32) est disposé essentiellement sur un axe central de la paroi externe de séparation (22) et en ce que la paroi interne de séparation (40) est essentiellement cylindrique.

5. Dispositif de traitement selon la revendication 3 ou 4, caractérisé en ce que la paroi interne de séparation cylindrique (40) est reliée au plateau ou écran (18) par des moyens de support (42, 46, 48, 50, 52) destinés à monter et à ajuster axialement la paroi interne de séparation (40) par rapport au plateau ou écran (18).

6. Dispositif de traitement selon la revendication 5, caractérisé en ce que les moyens de support (42, 46, 48, 50, 52) comprennent des moyens pour maintenir l'extrémité inférieure de ladite paroi interne de séparation généralement scellée par rapport au plateau ou écran (18) sur toute la plage d'ajustement axial de la paroi interne de séparation (40) par rapport au plateau ou écran (18).

7. Dispositif de traitement selon la revendication 5 ou 6, caractérisé en ce que les moyens de support (42, 46, 48, 50, 52) comprennent un collier cylindrique (42) débordant vers le haut depuis le plateau ou écran (18), l'extrémité inférieure de la paroi interne de séparation (40) étant reçue télescopiquement de manière ajustable dans le collier (42).

8. Dispositif de traitement selon l'une quelconque des revendications 1 à 7, caractérisé en ce que la partie (12) qui sert d'enceinte à produit s'ouvre dans le haut dans une chambre de dilatation (14).

9. Dispositif de traitement selon l'une quelconque des revendications 1 à 8, caractérisé en ce qu'il présente une source de gaz de fluidisation à laquelle appartient la chambre de collecte (16).

10. Procédé pour granuler ou enduire un produit dans un lit fluidisé, dans un dispositif de traitement (10) présentant une partie (12) qui sert d'enceinte à produit et s'ouvrant dans le haut dans une chambre de dilatation (14) et dans le bas dans une chambre de collecte (16), par un plateau de distribution de gaz ou écran (18) disposé de manière générale horizontalement et traversé par des ouvertures (20) en vue d'un écoulement vers le haut du gaz, en particulier de l'air, provenant de la chambre de collecte (16), dans la partie (12) qui sert d'enceinte à produit, cette dernière comprenant une paroi de séparation (22) essentiellement cylindrique, espacée au-dessus du plateau ou écran (18), pour diviser la partie (12) qui sert d'enceinte à produit en une région interne (30) de lit montant et une région externe (28) de lit descendant, et un gicleur de pulvérisation (32) déchargeant vers le haut, monté essentiellement en position coaxiale dans ladite paroi de séparation cylindrique (22), dans lequel un gaz, en particulier de l'air, est passé vers le haut à travers le plateau ou écran (18) et à travers la partie (12) qui sert d'enceinte à produit de telle sorte que le produit forme le lit fluidisé, caractérisé en ce que l'on fait s'écouler vers le haut une colonne de gaz radialement confinée et protégée, autour du gicleur de pulvérisation (32), depuis ledit plateau ou écran (18), et qu'on la décharge librement dans ladite région (30) de lit montant, à un niveau dont la hauteur est au moins égale à celle de l'extrémité supérieure du gicleur de pulvérisation (32), et/ou en ce qu'une paroi interne de séparation cylindrique (40) est disposée en position adjacente au plateau ou écran (18) de telle sorte que la paroi interne de séparation (40) entoure le gicleur de pulvérisation (32) et s'étende vers le haut depuis le plateau ou écran (18) jusqu'à un niveau d'une hauteur au moins égale à celle de l'extrémité supérieure du gicleur de pulvérisation (32), et en ce qu'un gaz traversant le plateau ou écran (18) vers le haut est conduit à travers un espace entouré par la paroi interne de séparation cylindrique (40) entourant le gicleur de pulvérisation (32), pour protéger le motif initial de pulvérisation développé par ledit gicleur (32) contre la pénétration de particules se déplaçant vers le haut dans ladite région (30) de lit montant.

11. Procédé selon la revendication 10, dans lequel le procédé est adapté pour réduire la durée du traitement nécessaire pour granuler ou enduire le produit.
